# FASCICULE DE BREVET EUROPEEN

(11) **EP 3 137 755 B1**
(45) Date de publication et mention de la délivrance du brevet: **03.07.2019**
(21) Numéro de dépôt: 15723276.0
(22) Date de dépôt: 29.04.2015
(51) Int. Cl.: F02C 7/06, F16N 31/00, F16H 57/04

(54) **MODULE DE TURBOMACHINE COMPORTANT UN CARTER AUTOUR D'UN EQUIPEMENT AVEC UN CAPOT DE RECUPERATION D'HUILE DE LUBRIFICATION**
TURBINENMOTORMODUL MIT EINEM GEHÄUSE UM EINE VORRICHTUNG MIT EINER ABDECKUNG ZUR RÜCKGEWINNUNG VON SCHMIERÖL
TURBINE ENGINE MODULE COMPRISING A CASING AROUND A DEVICE WITH A COVER FOR RECOVERING LUBRICATING OIL

(30) Priorité: 30.04.2014 FR 1453919
(43) Date de publication de la demande: 08.03.2017
(73) Titulaire: Safran Aircraft Engines, 75015 Paris (FR)
(72) Inventeur: PIKOVSKY, Catherine, 77550 Moissy-Cramayel Cedex (FR); FARVACQUE, Benoit, Guillaume, 77550 Moissy-Cramayel Cedex (FR)
(74) Mandataire: Gevers & Orès
(86) Numéro de dépôt international: PCT/FR2015/051162
(87) Numéro de publication internationale: WO 2015/166189

(56) Documents cités:
- FR-A1- 2 955 085
- US-A1- 2014 064 930
- US-B1- 6 223 616

## Description

### Domaine de l'invention et état de la technique :

La présente invention se rapporte au domaine de la lubrification des moteurs d'aéronef. Elle vise plus particulièrement un dispositif de récupération de l'huile qui a été utilisée par un équipement comportant une partie tournante.

Par exemple, un turbopropulseur à hélices contrarotatives peut intégrer un boîtier de réduction de vitesse dans une enceinte de lubrification des paliers. Cette enceinte est agencée pour guider l'huile sortant des équipements qu'elle contient vers des moyens de stockage. De plus elle est généralement en communication avec un déshuileur de l'air présent dans le circuit d'huile.

Le boîtier de réduction de vitesse (désigné ici PGB pour l'acronyme de l'anglais : Power Gear Box) nécessite une très grande quantité d'huile, à savoir plus de la moitié du débit total d'huile passant dans l'enceinte de lubrification.

Par ailleurs, la PGB comporte un système d'engrenages en rotation. Selon l'état de la technique illustré par exemple par le document US-B1- 6223616, un capot annulaire s'étend autour de la PGB et est solidaire en rotation d'une partie tournante de la PGB, de sorte que le capot tourne lui-même à grande vitesse. L'huile qui a lubrifié la PGB en ressort à la périphérie, par des orifices du capot externe de la PGB. L'huile traverse ces orifices par centrifugation et forme un jet très dispersé en rotation qui va éclabousser en grande quantité toutes les parois de l'enceinte de récupération autour de la PGB.

A cause de la grande quantité d'huile et de la dispersion des éclaboussures, l'huile sortant de la PGB peut poser des problèmes de récupération vers les moyens d'évacuation d'huile de l'enceinte. Elle risque alors, par exemple, de mal s'évacuer, ce qui risque de remplir l'enceinte et de fuir par les joints et ainsi d'envoyer de l'huile dans les zones feu ou de noyer la PGB.

La présente invention a pour but de proposer une solution simple pour récupérer efficacement le débit d'huile sortant d'un équipement, en particulier un équipement en rotation dans une enceinte de lubrification.

### Exposé de l'invention :

A cet effet, l'invention concerne un module de turbomachine comprenant un équipement agencé pour que de l'huile de lubrification s'en échappe par centrifugation autour d'un axe de rotation, ledit équipement comportant au moins une partie tournante et un capot solidaire de ladite partie tournante, ledit capot comportant des orifices radiaux traversants de passage de l'huile s'échappant par centrifugation et des moyens de guidage radialement vers l'extérieur, de l'huile sortant desdits orifices, et un carter définissant au moins une partie d'une enceinte de lubrification dudit équipement , ledit carter comportant au moins une gouttière, agencée pour récupérer l'huile passant par lesdits orifices radiaux et ayant une forme sensiblement annulaire centrée sur l'axe de rotation, caractérisé en ce que la gouttière comporte une paroi annulaire de fond comportant au moins un orifice d'évacuation et en ce que le carter comporte au moins un autre orifice situé à l'extérieur de la gouttière, ledit au moins un autre orifice et ledit au moins un orifice d'évacuation étant reliés à des moyens d'évacuation communs.

L'huile sortant des orifices est ainsi guidée efficacement vers la gouttière de récupération ce qui permet une meilleure récupération de l'huile et évite d'asperger d'éventuels autres éléments présents autour de l'équipement avec l'huile ayant lubrifié l'équipement. En particulier lorsque l'équipement est confiné dans une enceinte, cela évite que l'huile n'asperge une zone étendue des parois internes de l'enceinte puis éclabousse ou ruisselle sur d'autres éléments tels que les paliers, les joints ou les tubes de déshuileur.

Enfin, le fait que le carter comprenne au moins un autre orifice situé à l'extérieur de la gouttière, ledit au moins un autre orifice et ledit au moins un orifice d'évacuation étant reliés à des moyens d'évacuation communs, qui plus est directement au niveau du carter, permet de communaliser les pompes d'entraînement de l'huile récupérée dans l'enceinte provenant de l'équipement en rotation et des autres équipements contenus dans l'enceinte.

Avantageusement, ledit au moins un orifice d'évacuation est situé sensiblement au point le plus bas de la gouttière. De cette manière, l'emplacement de l'orifice d'évacuation dans la gouttière peut être configuré pour casser l'anneau d'huile et permettre de récupérer plus facilement le fluide.

Par définition, la gouttière comporte des parois latérales entourant une surface cylindrique formant la paroi de fond. Cette paroi de fond est placée en face des jets d'huile sortant des orifices du capot pour les intercepter. Les parois latérales permettent de récupérer les éclaboussures du jet d'huile heurtant la paroi de fond pour confiner l'huile dans la gouttière.

Avantageusement, le carter comprend une face radialement interne définissant une paroi de l'enceinte de lubrification et formant la paroi de fond de la gouttière. Cela simplifie la fabrication du module en évitant de monter la gouttière sur une bride, par exemple, pour la rapprocher du capot.

Avantageusement, la gouttière comprend deux parois annulaires latérales qui s'écartent l'une de l'autre radialement vers l'extérieur.

De cette manière, la section d'entrée de la gouttière pour l'huile éjectée des orifices du capot est plus faible que la surface de la paroi de fond interceptant le jet d'huile. Cela limite la possibilité que les éclaboussures d'huile ressortent de la gouttière et cela permet un meilleur guidage de l'anneau d'huile en rotation dans la gouttière pour pouvoir l'évacuer ensuite.

Chaque orifice radial du capot peut comporter un tube, destiné à former un moyen de guidage de l'huile.

L'extension des tubes à l'extérieur du capot permet, entre autres, d'augmenter le coefficient d'entraînement de l'huile et ce, jusqu'à un rayon supérieur à celui du capot, en sortie des tubes. Cela permet d'augmenter ainsi la vitesse circonférentielle de l'huile et aussi de diminuer l'évasement du jet projeté vers la paroi de l'enceinte. Comme, de plus, cela permet de rapprocher la sortie du jet des parois de l'enceinte de récupération d'huile, cela diminue la taille de la zone où doit être récupérée cette huile.

De préférence, les tubes s'étendent radialement vers l'extérieur depuis le capot et sont inclinés dans un même plan transversal et dans une même direction autour de l'axe de rotation.

Avantageusement, dans ce cas, le capot est configuré pour que la direction dans laquelle sont orientés les tubes corresponde au sens de rotation du capot sur l'équipement en fonctionnement. De cette manière, l'orientation des tubes accroît la composante tangentielle de l'huile projetée sur une paroi de récupération d'huile. Il peut ainsi se former un anneau d'huile en rotation qui sera plus facilement guidé vers un orifice d'évacuation.

De préférence, le plan transversal dans lequel s'étendent les tubes correspond à un rayon maximal du carter annulaire.

L'invention concerne également une turbomachine comprenant un tel module, équipement ou capot.

### Brève description des figures :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :
La figure 1 présente schématiquement un module de turbomachine selon l'invention, ce module comportant un équipement tournant, un capot annulaire et un carter annulaire, ici en coupe selon un demi-plan passant par l'axe de rotation de l'équipement.
La figure 2 est une vue schématique de face du capot et du carter annulaire de la figure 1.
Les figures 3a, 3b et 3c présentent schématiquement une première variante de réalisation d'un carter annulaire selon l'invention, vu de face, en coupe axiale et de dessus pour la partie basse du carter.
Les figures 4a, 4b et 4c présentent schématiquement une deuxième variante de réalisation d'un carter annulaire selon l'invention, vu de face, en coupe axiale et de dessus pour la partie basse du carter.

### Description d'un mode de réalisation :

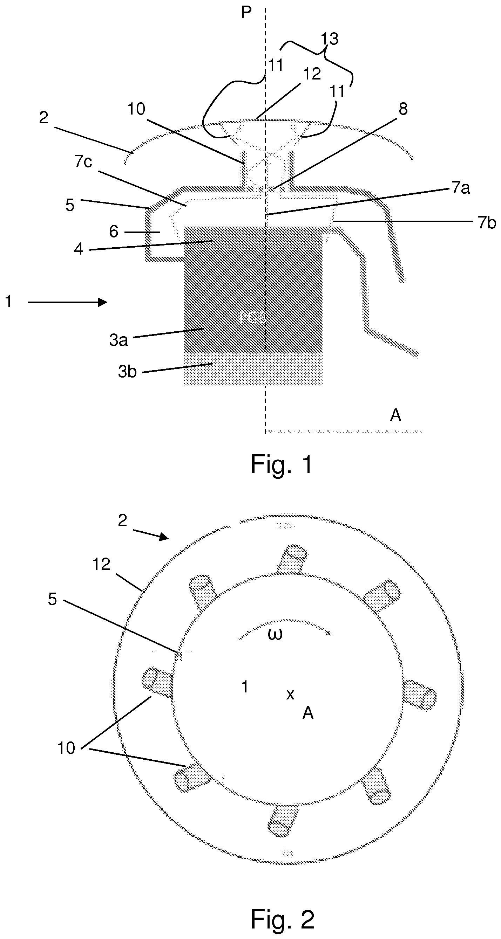

La figure 1 représente un équipement 1 de turbomachine, qui est monté dans une enceinte et mobile en rotation autour d'un axe A. Comme on peut le voir sur la figure, l'encombrement radial de l'équipement 1 est généralement nettement inférieur à l'espace défini par les parois internes de l'enceinte, qui sont formées par au moins un carter annulaire 2 s'étendant autour de l'équipement 1.

Sur l'exemple présenté, cet équipement 1 est une PGB. Une arrivée d'huile, non représentée sur la figure, apporte de l'huile dans la région centrale de la PGB pour la lubrifier. Cette huile traverse par entraînement centrifuge diverses parties actives de la PGB contenant des engrenages. Ces parties sont schématiquement représentées sur la figure par des parties actives internes 3a et 3b tournant dans un sens, entourée par une partie active externe 4, contrarotative.

Sur cet exemple, dans le cas d'une PGB avec un train d'engrenages épicycloïdal, la partie la plus interne 3b représente un arbre d'entrée planétaire sous la forme d'une roue dentée, qui est montée par une liaison par cannelures sur l'arbre de turbine tournant dans un sens de rotation en entraînant la PGB. La partie 3a représente un porte-satellites supportant des satellites, par exemple au nombre de trois, qui s'engrènent autour de l'arbre d'entrée 3b. La partie externe 4 représente une couronne externe qui s'engrène dans les satellites. Les rapports de dimensions entre les différents éléments sont agencés, ici, pour que la couronne externe 4 tourne en sens inverse de l'arbre d'entrée 3b, les satellites tournants par rapport au porte-satellites 3a et l'entraînant, ici, en rotation dans le même sens que l'arbre d'entrée 3b mais avec une vitesse différente. Cette description succincte illustre le fait que, dans un tel dispositif, de nombreuses pièces sont en contact avec des mouvements relatifs et des efforts importants, ce qui nécessite une forte quantité d'huile pour la lubrification.

L'ensemble de la PGB est confiné dans un capot annulaire externe 5 tournant. Ce capot 5 est solidaire de la partie active interne 3a et tourne donc dans le sens contraire à la partie active externe 4 de la PGB. Le capot 5 s'étend autour et à distance de la partie active 4 pour former une cavité interne 6 qui sert, entre autre, à la réception de l'huile de lubrification sortant de la PGB.

L'huile ayant lubrifié les parties actives 3a, 3b et 4 de la PGB 1 peut en sortir par différents chemins 7a, 7b, 7c. Le capot externe 5 est conformé pour guider l'huile provenant de ces différents chemins vers des orifices de sortie 8.

Ces orifices 8 sont avantageusement localisés dans une zone de rayon maximal du capot 5 pour favoriser l'évacuation de l'huile par centrifugation. De plus, ils sont en général plusieurs, leur nombre variant par exemple de huit à soixante quinze. Ils sont de préférence uniformément répartis en circonférence dans un plan P perpendiculaire à l'axe de rotation A.

Comme c'est montré sur la figure 1, l'huile sortant de la PGB 1 est éjectée de manière essentiellement radiale par les orifices 8. Cependant, divers phénomènes entrainent la dispersion du jet de sortie. Premièrement, les différents chemins 7a, 7b, 7c de l'huile dans la cavité 6 n'arrivent pas à l'orifice 8 avec la même incidence. De plus, les effets d'interaction de l'écoulement d'huile avec les bords de l'orifice 8 peuvent dévier le jet en sortie.

Selon l'invention, un tube 10 est installé en sortie de chaque orifice 8 sur la face externe du capot 5 de la PGB 1. La section de ce tube 10 correspond ici à celle de l'orifice 8 et l'on profite de l'espace entre le capot 5 et le carter 2 de l'enceinte pour donner une extension radiale au tube 10, rapprochant sa sortie de la face interne du carter 2 sans le toucher. Enfin, comme c'est illustré sur la coupe axiale de la figure 1, ces tubes 10 sont sensiblement orientés dans le plan P transversal à l'axe de rotation A. Leur section transversale est sensiblement constante le long de leur extension radiale.

Les tubes 10 peuvent avoir été rapportés sur la paroi externe du capot 5, en y étant fixés par soudure ou brasage. Ils peuvent également venir de matière avec le capot 5, formant avec lui un ensemble monobloc.

Par ailleurs, on profite de l'espace restant entre la face interne du carter 2 et la sortie des tubes 10 pour prévoir, sur cette face interne du carter 2, une gouttière 13 annulaire située dans le même plan P. La gouttière annulaire 13 s'étend autour de l'axe de rotation A. La gouttière annulaire 13 comprend deux parois annulaires latérales 11, symétriques vis-à-vis du plan P ainsi qu'une paroi annulaire de fond 12.

Avantageusement, la forme du carter 2 au voisinage du plan P et celle de la paroi de fond 12 sont sensiblement de section transversale circulaire. Cela permet de faire en sorte que les extrémités des tubes 10 du capot 5 sont à une distance constante de la gouttière 13 au cours de leur rotation.

Avantageusement, le plan P se trouve au rayon maximum, afin que la récupération de l'huile se fasse plus facilement.

En coupe axiale, sur la figure 1, les bords périphériques internes des parois annulaires latérales 11 déterminent entre eux une ouverture annulaire de la gouttière 13, qui est alignée radialement avec les sorties (extrémités radialement externes) des tubes 10. L'ouverture a une largeur ou dimension axiale sensiblement égale ou légèrement plus grande que le diamètre des tubes 10, qui sont de préférence sensiblement égaux.

Comme dans l'exemple présenté, les parois latérales 11 s'écartent ou divergent l'une de l'autre radialement vers l'extérieur. Elles délimitent entre elles la paroi de fond 12, leurs faces internes étant orientées vers cette paroi de fond 12.

Cette paroi de fond 12 est réalisée sur l'exemple par une partie de la paroi interne du carter 5 à laquelle sont fixées les parois annulaires latérales 11. Dans ce cas, Les parois annulaires latérales 11 peuvent avoir été rapportées sur la paroi interne du carter 2, en y étant fixées par soudure ou brasage. Elles peuvent également venir de matière avec le carter 2, formant avec lui un ensemble monobloc.

Comme c'est illustré sur la figure 1, l'huile partant dans différentes directions autour du plan transversal P à la sortie des orifices 8 rencontre dans un premier temps les parois internes des tubes 10. Suivant les chemins empruntés, la réflexion peut renvoyer l'huile directement vers la paroi de fond 12 de la gouttière 13. La direction de l'écoulement d'huile peut être d'autant plus parallèle au plan P après réflexion que les bords des tubes 10 donnent une impulsion radiale forte, entraînés par la rotation du capot 5 externe.

Comme on le voit pour certains chemins 7a, 7b, la réflexion de l'huile sur les parois des tubes 10 peut ne pas être suffisante pour la diriger vers la paroi de fond 12 de la gouttière 13. Dans ce cas, ce sont les parois latérales 11 qui interceptent l'huile et la renvoient vers la paroi de fond 12. La forme inclinée des parois 11 peut également avoir une fonction supplémentaire, non représentée sur la figure, de capter les éclaboussures de jets d'huile impactant directement la paroi de fond 12 de la gouttière 13.

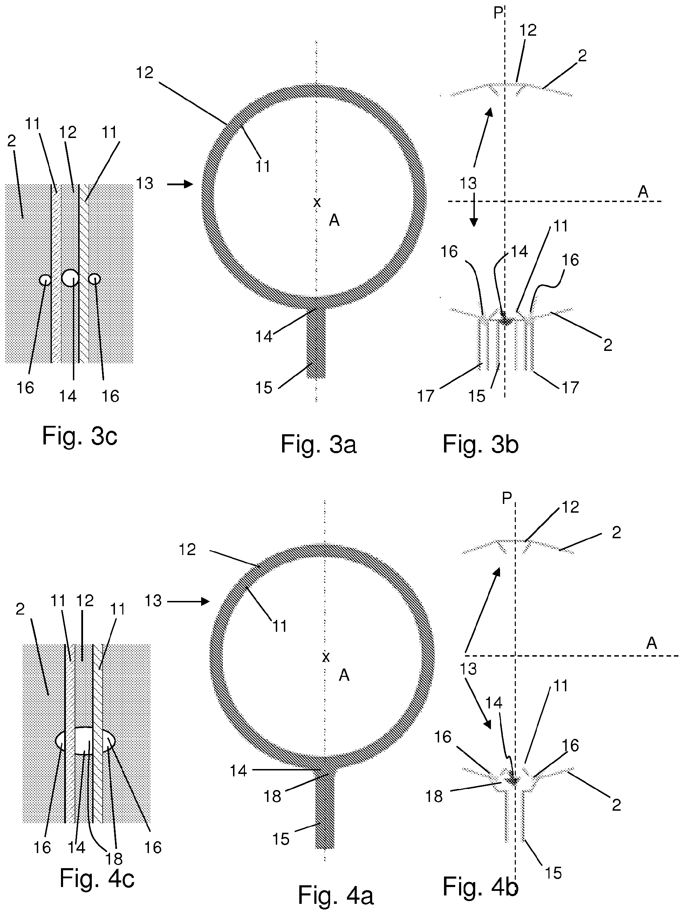

De cette manière, avec l'impulsion tangentielle imprimée par la rotation du capot 5, un anneau tournant d'huile peut se former contre la paroi de fond 12 de la gouttière 13. L'huile est ainsi canalisée et plaquée contre la paroi de fond 12 de la gouttière 13 par la force centrifuge. En référence aux figures 3a et 4a, cela permet de récupérer l'huile en plaçant un orifice 14 d'évacuation dans le point le plus bas de la paroi de fond 12.

En référence à la figure 2, on peut améliorer cet effet de rotation de l'anneau d'huile en inclinant les tubes 10 dans le sens de rotation ω du capot 5 lorsque la PGB fonctionne par rapport au rayon dans le plan P transversal.

En référence aux figures 3a et 4a, un orifice 14 est placé dans la paroi de fond 12 de la gouttière et communique avec une canalisation 15 de récupération, elle-même communiquant avec une pompe, non représentée, pour entraîner l'huile récupérée. Cette canalisation 15 forme avec la pompe un moyen d'évacuation de l'huile récupérée dans la gouttière 13.

En reprenant l'exemple de la PGB 1 dans un turbopropulseur contrarotatif, l'axe A de rotation de la PGB 1, correspondant à celui du turbopropulseur, est en général sensiblement horizontal. L'orifice 14 de récupération est alors situé dans la partie basse de la gouttière 13 pour que l'huile puisse y ruisseler par gravité, en particulier à l'arrêt du turbopropulseur. Par analogie avec le cadran d'une horloge, on peut dire que l'orifice 14 est situé à 6 heures (6h) autour de l'axe A. L'emplacement de l'orifice d'évacuation 14 permet d'avoir une forme générale pour forcer l'évacuation de l'huile et ainsi éviter qu'il y ait accumulation d'huile formant un anneau.

Par ailleurs, en référence aux figures 3b et 4b, l'enceinte contient en général d'autres équipements, non représentés, comme des paliers de guidage d'arbres. Le point bas de la gouttière 13 étant généralement aussi le point bas de l'enceinte, des orifices 16 sont pratiqués dans les parois du carter 2 pour évacuer l'huile provenant de ces équipements et s'écoulant sur les parois internes de l'enceinte. Les trous d'évacuation 16 et 14 sont avantageusement placés au plus grand rayon du carter annulaire 2, afin que l'huile y soit entrainée par gravité.

Dans une première variante, illustrée sur les figures 3a à 3c, les orifices 16 sont pratiqués dans les parois du carter 2 à l'extérieur des parois annulaires latérales 11 de la gouttière 13 qui arrêtent l'huile provenant des autres équipements. Ces orifices 16 correspondent à des canalisations 17 débouchant dans l'enceinte de lubrification. Ces canalisations 17, avec avantageusement des pompes dédiées, non représentées sur lesquelles elles sont branchées, forment des moyens d'évacuation de l'huile des autres équipements que la PGB.

Dans cette première variante, l'orifice 14 de la gouttière ne communique pas avec le ou les orifices 16 du carter 2, à l'extérieur de la gouttière 13. Les canalisations 15, 17 respectivement branchées à ces orifices 14, 16, correspondent avantageusement donc à des moyens d'évacuation indépendants ou distincts. Il serait possible de regrouper les canalisations 15 et 17 avant le branchement de la pompe de récupération.

Dans une deuxième variante, illustrée sur les figures 4a à 4c, les orifices 16 du carter 2 à l'extérieur de la gouttière sont mis en communication avec la canalisation 15 dans laquelle passe l'huile venant de la gouttière 13. Ceci peut être réalisé au moyen d'une petite cavité collectrice 18, débouchant dans le point bas du carter 2 et dont l'extension axiale est plus grande que la largeur de la paroi du fond 12 du la gouttière. Les orifices 14, 16 dans la paroi du fond 12 de la gouttière et dans le carter 2 à l'extérieur de la gouttière 13 sont formés par l'ouverture de cette cavité collectrice 18 dans le carter 2 et sont séparés par les parois latérales 11 de la gouttière 13. La canalisation 15 débouche dans le fond de cette cavité collectrice 18.

Il serait aussi possible que les trous d'évacuation 16 se trouvent sur un carter différent de celui où sont situés les trous d'évacuation 14. Ainsi, l'huile sortant de la PGB serait évacué par le trou d'évacuation 14 qui tomberait dans une zone 18, sur un autre carter. Dans cette zone 18, l'huile de la PGB et des autres éléments se mélangerait et s'évacuerait via la canalisation 15.

Cette disposition permet une communalisation des pompes entrainant l'huile de récupération.

La mise en oeuvre de l'invention a été détaillée dans le cas de l'installation d'une PGB dans un turbopropulseur mais il va de soi qu'elle peut être mise en oeuvre pour la récupération d'huile de lubrification dans un équipement tournant quelconque à l'intérieur d'une enceinte.

## Revendications

1. Module de turbomachine comprenant un équipement (1) agencé pour que de l'huile de lubrification s'en échappe par centrifugation autour d'un axe de rotation (A), ledit équipement (1) comportant au moins une partie tournante (3a) et un capot (5) solidaire de ladite partie tournante (3a), ledit capot (5) comportant des orifices (8) radiaux traversants de passage de l'huile de lubrification s'échappant par centrifugation et des moyens de guidage radialement vers l'extérieur, de l'huile de lubrification sortant desdits orifices (8), et un carter (2) définissant au moins une partie d'une enceinte de lubrification dudit équipement (1), ledit carter (2) comportant au moins une gouttière (13), agencée pour récupérer l'huile passant par lesdits orifices (8) et ayant une forme sensiblement annulaire centrée sur l'axe de rotation (A), la gouttière (13) comportant une paroi annulaire de fond (12) comportant au, moins un premier orifice (14) d'évacuation,
**caractérisé en ce que** le carter (2) comporte au moins un second orifice (16) d'évacuation situé à l'extérieur de la gouttière (13), et **en ce que** ledit équipement (1) comprend des moyens d'évacuation (15), ledit au moins second orifice (16) d'évacuation et ledit au moins premier orifice (14) d'évacuation étant reliés aux moyens (15) d'évacuation qui sont communs.

2. Module de turbomachine selon la revendication 1, dans lequel ledit au moins un orifice (14) d'évacuation est situé sensiblement au point le plus bas de la gouttière (13).

3. Module de turbomachine s'étendant selon la revendication 1 ou 2, dans lequel le carter (2) comprend une face radialement interne définissant une paroi de l'enceinte de lubrification et formant la paroi de fond (12) de la gouttière (13).

4. Module de turbomachine selon l'une des revendications précédentes, dans lequel la gouttière (13) comprend deux parois annulaires latérales (11) qui s'écartent l'une de l'autre radialement vers l'extérieur.

5. Module de turbomachine selon l'une des revendications précédentes, dans lequel que chaque orifice (8) du capot (5) comporte un tube (10), destiné à former un moyen de guidage de l'huile.

6. Module de turbomachine selon la revendication 5, dans lequel les tubes (10) s'étendent radialement vers l'extérieur depuis le capot (5) et sont inclinés dans un même plan transversal (P) et dans une même direction autour de l'axe de rotation (A).

7. Turbomachine comportant un module de turbomachine (5, 1, 2, 13) selon l'une des revendications 1 à 6.

## Patentansprüche

1. Turbomaschinenmodul, umfassend eine Vorrichtung (1), die angeordnet ist, damit durch Zentrifugierung um eine Drehachse (A) Schmieröl daraus austritt, wobei die Vorrichtung (1) mindestens einen drehbaren Teil (3a) und eine Abdeckung (5) einschließt, die mit dem drehbaren Teil (3a) fest verbunden ist, wobei die Abdeckung (5) durchgehende radiale Öffnungen (8) zum Durchgang des Schmieröls, das durch Zentrifugierung austritt, und Führungsmittel radial nach außen einschließt, wobei Schmieröl aus diesen Öffnungen (8) herausfließt, und ein Gehäuse (2), das mindestens einen Teil eines Schmierbehälters der Vorrichtung (1) definiert, wobei das Gehäuse (2) mindestens eine Rinne (13) einschließt, die angeordnet ist, um Öl, das durch die Öffnungen (8) durchgeht, zurückzugewinnen, und eine im Wesentlichen ringförmige Form zentriert auf der Drehachse (A) aufweist, wobei die Rinne (13) eine ringförmige Bodenwand (12) einschießt, die mindestens eine erste Auslauföffnung (14) einschließt,
**dadurch gekennzeichnet, dass** das Gehäuse (2) mindestens eine zweite Auslauföffnung (16) einschließt, die sich außerhalb der Rinne (13) befindet, und dadurch, dass die Vorrichtung (1) Auslassmittel (15) umfasst, wobei die mindestens zweite Auslauföffnung (16) und die mindestens erste Auslauföffnung (14) mit den Auslaufmittel (15) verbunden sind, die gemein sind.

2. Turbomaschinenmodul nach Anspruch 1, wobei sich die mindestens eine Auslassöffnung (14) im Wesentlichen am niedrigsten Punkt der Rinne (13) befindet.

3. Turbomaschinenmodul, das sich nach Anspruch 1 oder 2 erstreckt, wobei das Gehäuse (2) eine radial innere Fläche umfasst, die eine Schmierbehälterwand definiert und die Bodenwand (12) der Rinne (13) bildet.

4. Turbomaschinenmodul nach einem der vorstehenden Ansprüche, wobei die Rinne (13) zwei seitliche ringförmige Wände (11) umfasst, die sich radial nach außen voneinander entfernen.

5. Turbomaschinenmodul nach einem der vorstehenden Ansprüche, wobei jede Öffnung (8) der Abdeckung (5) ein Rohr (10) einschließt, das zum Bilden eines Führungsmittels des Öls vorgesehen ist.

6. Turbomaschinenmodul nach Anspruch 5, wobei die Rohre (10) sich von der Abdeckung (5) radial nach außen erstrecken und in einer gleichen Querebene (P) und in einer gleichen Richtung um die Drehachse (A) geneigt sind.

7. Turbomaschine, einschließend ein Turbomaschinenmodul (5, 1, 2, 13) nach einem der Ansprüche 1 bis 6.

## Claims

1. Turbine engine module comprising a device (1) arranged so that the lubricating oil escapes therefrom by centrifugation about an axis of rotation (A), said device (1) comprising at least one rotating portion (3a) and a cover (5) rigidly connected to said rotating portion (3a), said cover (5) comprising radial through ports (8) for the passage of the oil escaping by centrifugation and means (10) for guiding the oil leaving said ports (8) radially outwards, and a casing (2) defining at least one portion of a lubrication enclosure of said device (1), said casing (2) comprising at least one gutter (13), arranged to recover the oil passing through said radial ports (8) and having a substantially annular shape centred on the axis of rotation (A), the gutter (13) comprising an annular bottom wall (12) having at least a first discharge port (14), **characterised in that** the casing (2) comprises at least a second discharge port (16) located on the outside of the gutter (13), and **in that** said device (1) comprises discharge means (15), said at least second discharge port (16) and said at least first discharge port (14) being connected to the discharge means (15) that are common.

2. Turbine engine module according to claim 1, in which said at least one discharge port (14) is located substantially at the lowest point of the gutter (13).

3. Turbine engine module extending according to one claim 1 or 2, in which the casing (2) comprises a radially inner face defining a wall of the lubrication enclosure and forming the bottom wall (12) of the gutter (13).

4. Turbine engine module according to any of the preceding claims, in which the gutter (13) comprises two annular side walls (11) which advantageously move away from each other radially outwards.

5. Turbine engine module according to any of the preceding claims, in which each radial port (8) of the cover (5) comprises a pipe (10), intended to form a means (10) for guiding the oil.

6. Turbine engine module according to claim 5, in which the pipes (10) extend radially outwards from the cover (5) and slope in the same transverse plane (P) and in the same direction about the axis of rotation (A).

7. Turbine engine comprising a module (5, 1, 2, 13) according to any of claims 1 to 6.
